(19) Europäisches Patentamt
European Patent Office
Office européen des brevets

(11) **EP 2 299 417 A1**

(12) **EUROPEAN PATENT APPLICATION**
published in accordance with Art. 153(4) EPC

(43) Date of publication:
**23.03.2011 Bulletin 2011/12**

(51) Int Cl.:
**G08G 1/00** (2006.01)   **B65G 61/00** (2006.01)
**G01C 21/00** (2006.01)   **G06Q 50/00** (2006.01)
**G08G 1/0969** (2006.01)

(21) Application number: **09750537.4**

(22) Date of filing: **18.05.2009**

(86) International application number:
**PCT/JP2009/059136**

(87) International publication number:
**WO 2009/142175 (26.11.2009 Gazette 2009/48)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.05.2008 JP 2008132520**

(71) Applicant: **Inter-University Research Institute Corporation**
**Research Organization of Information and Systems**
**Tokyo 191-0014 (JP)**

(72) Inventor: **SATOH, Ichiro**
**Tokyo 101-8430 (JP)**

(74) Representative: **Betten & Resch**
**Patentanwälte**
**Theatinerstrasse 8**
**80333 München (DE)**

(54) **COLLECTION-AND-DELIVERY PATH SELECTING SYSTEM**

(57)    A proposed system includes three parts, a truck operation entity 110, shippers or receivers 120A, 120B, 120C, and a collection and delivery (logistic) path (route) selecting system 100 which performs selecting a truck. Each time the truck operation entity 110 changes a collection and delivery (logistic) route of a truck, the truck operation entity 110 registers the route to a route database 104 of the logistic route selecting system 100, together with a truck identifier, using a terminal connected to an electrical network. Shipping entities (product shipping side) or receiving entities (product receiving side) 120A, 120B, 120C input from a reader respective logistic requirements and restrictions, for example, collection and delivery (logistic) places and constraint conditions, such as collection and delivery (logistic) order, etc., which may be written in an RFID or from each terminal in advance. When a truck meeting the requirements and restrictions is available, an identifier of the truck is received from the logistic route selecting system 100. The route selecting system 100 receives logistic routes and a required route each described in a specific language, and determines an appropriate truck.

FIG. 5

EP 2 299 417 A1

**Description**

Technical Field

The present invention relates to selecting a product collection and delivery (logistic) path (route), and in particular relates to selecting a collection and delivery (logistic) route satisfying a requirement among from multiple collection and delivery (logistic) routes.

Background Art

When collecting materials or parts (for example, cow's milk) to produce products at a factory, it is presupposed that the shipper (for example, a dairy farm) makes delivery to the receiver (for example, a dairy factory), as represented by a just-in-time system.

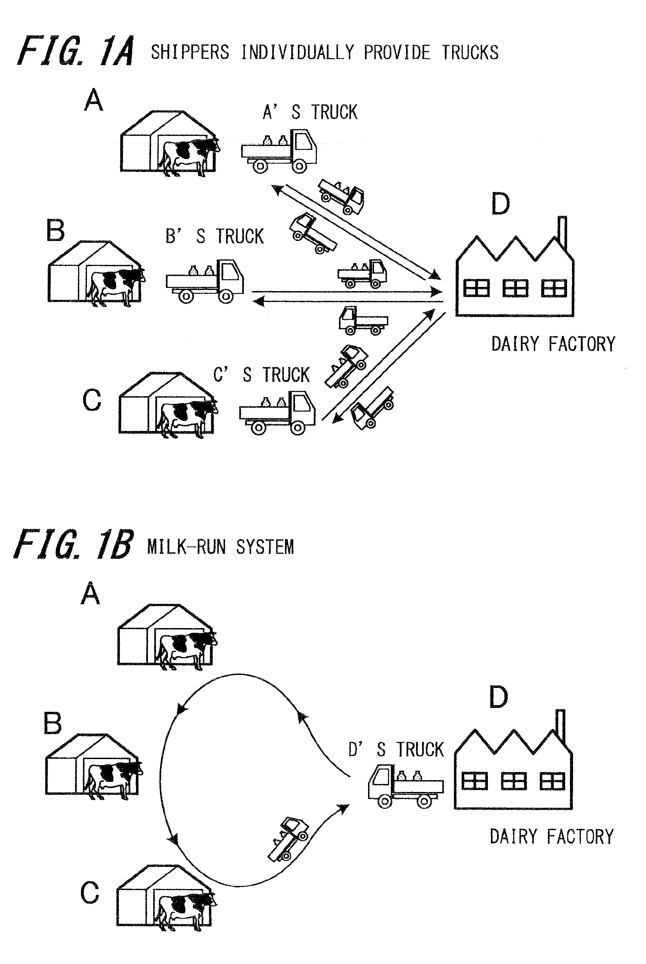

Accordingly, as illustrated in Fig. 1A, each shipper, such as a diary farm A, a diary farm B, and a diary farm C, provides own truck and delivers materials or parts (cow's milk) to a receiver (a diary factory D). Thereby, readiness is improved as in the just-in-time system, etc. , however, on the other hand, the number of trucks increases, and in addition, each truck returning from the receiver to the shipper is empty, thus it is low in efficiency.

As a method to solve this problem, a so-called milk-run system is attracting attention. As illustrated in Fig. 1B, in the milk-run system, a diary factory D as a business entity (or a contracted carrier), which will be a receiver, provides one or multiple trucks, and collects products via routes going round multiple shippers (diary farms A through C). As a result, as compared with an existing system, not only the number of trucks decreases, but also the number of times empty trucks are run decreases, so that the amount of carbon dioxide ($CO_2$) emitted by trucks can be decreased.

The milk-run system is attracting attention as an effective method for decreasing the amount of $CO_2$ emitted by trucks, however, few businesses use the system yet. This is because that it is difficult for the system to satisfy requirements and restrictions demanded in collection of goods.

Actually, there are many requirements in collection of goods. For example, in the case of foods, because freshness is demanded for foods, it comes to that foods that are hard to be spoiled during transportation by a truck are collected early, and foods for which freshness is demanded are saved for later pick-up and are collected immediately before the truck arrives at the receiver's place. Also, when shippers are factories, there is a case that materials and parts produced at one factory are transported to another factory, and in this case, sometime the order in which a truck goes round the shippers is pre-determined. Note that in the milk-run system, because materials and parts of multiple shippers are collected, all materials and parts cannot be necessarily loaded on one truck, so that usually one or more trucks are provided, and routes of the trucks are often different from each other.

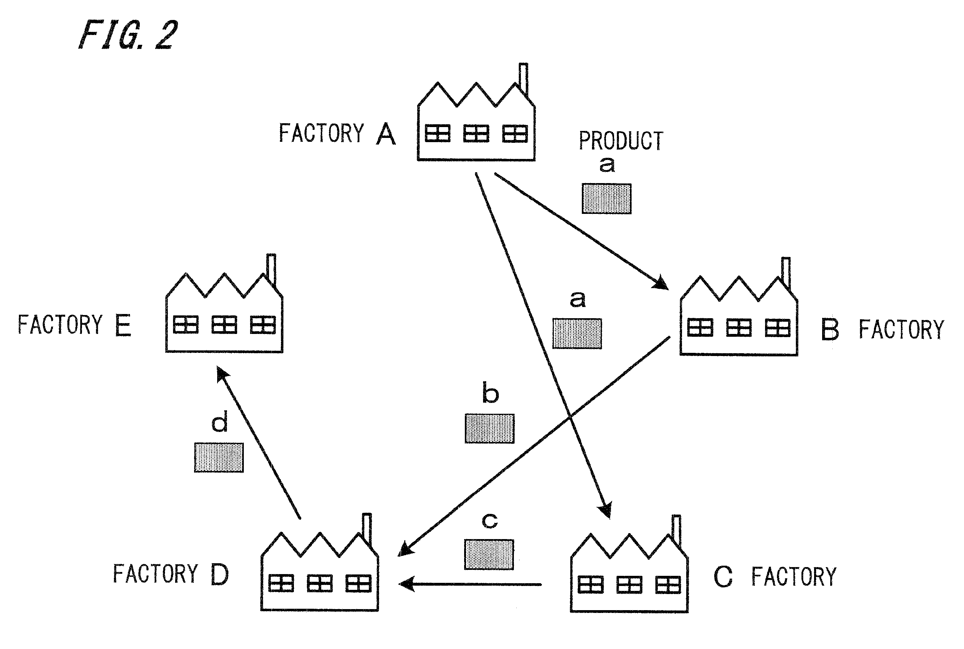

In a just-in-time manufacturing system, because a truck is provided for each shipper, it has been relatively easy to satisfy restrictions and conditions described above, however, in the milk-run system, because one or more trucks are commonly used, it comes to that each shipper or receiver side selects a truck which follows a route satisfying restrictions and conditions. However, it is not so easy to select a truck which efficiently collects products while satisfying restrictions and conditions, and when the restrictions and conditions are more complicated or when the shippers and receivers are increased in number, selecting an appropriate truck becomes difficult. For example, Fig. 2 illustrates dependency relations of shippers and receivers. In Fig. 2, it is illustrated that a factory A delivers parts to a factory B and a factory C, and the factory B and the factory C deliver parts to a factory D, and the factory D delivers parts to a factory E.

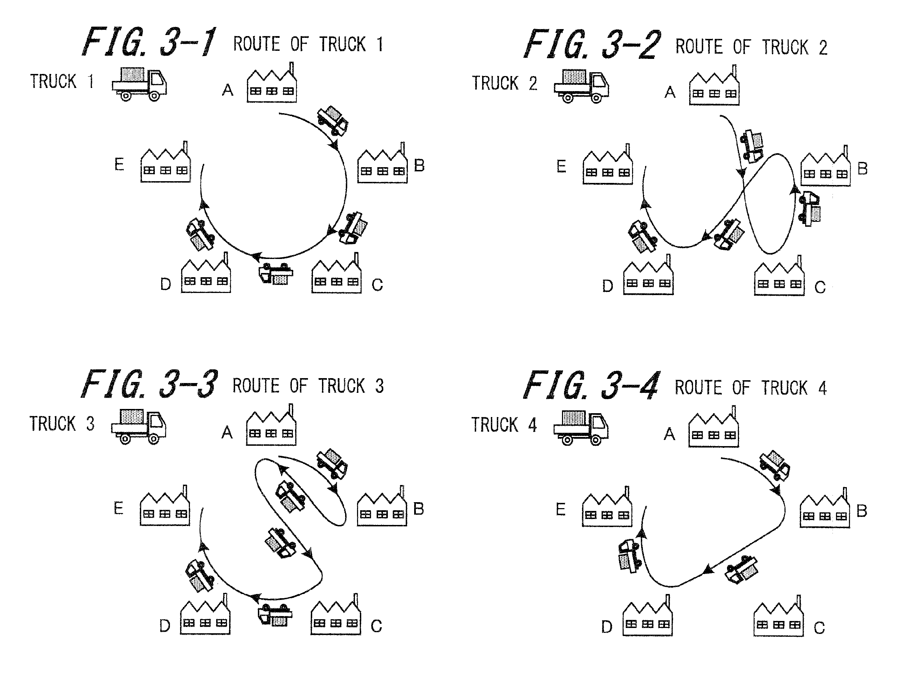

Fig. 3-1 through Fig. 3-4 illustrate routes of four trucks operated under the milk-run system. Trucks in Fig. 3-1, Fig. 3-2, and Fig. 3-3 are operated via routes satisfying restrictions illustrated in Fig. 2. However, the truck in Fig. 3-4 does not satisfy the restrictions of Fig. 2. It would be understood that it is difficult to judge which route would satisfy the restrictions (conditions) illustrated in Fig. 2. Moreover, among the routes (Fig. 3-1, Fig. 3-2, and Fig. 3-3) satisfying the restrictions, in order to suppress the amount of $CO_2$ emission, it is necessary to select a truck that is operated via an efficient logistic route.

Patent Document 1: Japanese Unexamined Patent Application Publication No. 2004-363907
Non-Patent Document 1: R. Milner, Communication and Concurrency, Prentice Hall, 1989

Disclosure of the Invention

Problems to be Solved by the Invention

The purpose of the present invention is to provide a system that can select a truck satisfying a required route, among from one or more trucks for which logistic routes have been fixed, respectively.

Means for Solving the Problems

In order to accomplish the above-described purpose, the present invention provides a collection and delivery (logistic) route selecting system including: a storage device storing one or more logistic routes in advance; a required route inputting device inputting a required route for an object to be put on a logistic route; a comparison device comparing the inputted required route and the logistic routes stored in the storage device and obtaining logistic routes satisfying the inputted required route; and an output device outputting a logistic route satisfying the required route whose number of times of movement from one logistic place to another logistic place is the smallest among the logistic routes satisfying the required route. The required route describes restrictions and requirements about order of visiting logistic places, each logistic route describes order of visiting logistic places with a sub-set of the required route, and the comparison device compares the required route and the logistic routes, each having been converted to a form of a tree structure, and obtains respective numbers of times of movement of the logistic routes satisfying the required route.
The logistic route selecting system may preferably further include a device for storing one or more logistic routes in the storage device, the device converting respective descriptions of one or more logistic routes to tree structures when storing the one or more logistic routes in the storage device, and the comparison device may preferably convert description of the inputted required route to a tree structure, and read out from the storage device the logistic routes whose descriptions having been converted to tree structures to compare with the require route whose description has been converted to a tree structure.
In the logistic route selecting system, the comparison device may obtain respective sums of movement distances of the logistic routes satisfying the required route, rather than the numbers of times of movement, and the output device may output a logistic route satisfying the required route whose sum of movement distances is the smallest among the logistic routes satisfying the required route.
The required route in the description above is described with language for describing logistic routes described below. The language for describing logistic routes defines requirements and restrictions about the order of visiting logistic places for objects to be collected at shippers or delivered to receivers (for example, products to be shipped from factories), and description of the required route can be converted to a tree structure for comparison.
The logistic route is described with a sub-set of description of the required route (for example, a sub-set of the language for describing (logistic routes), and describes the order in which a truck, etc. making a collection and delivery goes round logistic places.

Effects of the Invention

With the above-described constitution, it is possible to quickly and appropriately determine a truck satisfying a required route, among from one or more trucks for which logistic routes have been fixed, respectively.

Brief Description of Drawings

Fig. 1A and Fig. 1B are diagrams for describing conventional collection and delivery of products.
Fig. 2 is a diagram illustrating dependency relations of shippers and receivers.
Fig. 3-1, Fig. 3-2, Fig. 3-3, and Fig. 3-4 are diagrams illustrating truck routes.
Fig. 4-1, Fig. 4-2, Fig. 4-3, and Fig. 4-4 are diagrams illustrating description examples of routes and respective routes.
Fig. 5 is a system configuration diagram as an embodiment of the present invention.
Fig. 6 is a flowchart illustrating a process of a logistic route selecting system.
Fig. 7 is a diagram for describing a judgment process using a tree structure.

Best Mode for Carrying out the Invention

As described above, the milk-run system is attracting attention as an effective method for reducing the amount of $CO_2$ emitted by trucks, however, few business entities use the milk-run system yet. This is because that it is difficult for the milk-run system to satisfy requirements and restrictions demanded in collection and delivery of products.
Routes of collection and delivery (logistic) trucks may be daily changed, however, actually, changing a route of a truck during collection and delivery is difficult, and this is one of the reasons that the milk-run system is difficult to satisfy requirements and restrictions in collection and delivery of products.
The present invention proposes language for describing logistic routes of trucks including those in the milk-run system, and a method for selecting a truck operated via a route satisfying restrictions and conditions.
Note that what is described below is a method for selecting a route satisfying restrictions and conditions, among from routes assigned to multiple trucks, respectively, and it is not intended to propose a method for finding out a shortest route.

<Collection and Delivery (Logistic) Trucks and Language for Describing Logistic Routes of Trucks>

As the characteristics of logistic trucks and language for describing logistic routes, those described below are conceivable:

One or more logistic trucks are provided, and when multiple trucks are provided, the orders in which respective trucks go round logistic places may be different from each other. Each route is expressed by names of shippers and/or receivers the truck visits, and trucks are run according to respective routes.

Restrictions and requirements about collection and delivery (logistic) order are complicated. Logistic order is expressed by names of shippers and/or receivers and the order in which a truck arrives at respective shippers and/or receivers. However, there are a case that the order in which the truck arrives at respective shippers and/or receives is not definite, and a case that stopping at another shipper or receiver zero times or more during collection and delivery is allowed.

For financial reasons, adding equipment to each truck is not possible. Also, additional work for the proposed method must be minimal.

The required route may be sometime different one from another depending on individual products or materials. Therefore, description of the required route should be compact so that the required route can be embedded in an RFID tag and a two-dimensional bar code.

The programming language for describing a logistic route of a truck is defined as process calculation (Process Calculus), and describes the order of visiting logistic places.

The programming language for describing restrictions and requirements about logistic order is an expanded language of the language describing the order of visiting logistic places, with respect to selectively going round several logistic places, not considering logistic order, etc.

<Outline of Proposed Language>

The proposed language is a language to which a method of determining whether or not a logistic route of a truck satisfies restrictions and requirements is applied, and can determine that, in addition to that the route satisfies restrictions and requirements, the truck will not follow a route against the restrictions and requirements.

It is necessary to select a truck having a route satisfying restrictions and requirements about logistic order. However, restrictions and requirements are complicated, so that the selection of such a truck is not easy. Moreover, if inappropriate selection is made, it may cause delay in production and/or delivery, and may give bad influence on qualities of collected products. Therefore, in the present invention, route selection using a communication system (refer to Patent Document 1) and a software verification method is proposed.

Taking for instance a truck 1 taking a route going round factories A, B, C, D, and E in that order, which is illustrated in Fig. 3-1, and a truck 2 taking a route going round the factories A through E in the order of A, C, B, D and E, which is illustrated in Fig. 3-2, the former route is described as A;B;C;D;E, and the latter route as A;C;B;D;E.

Also, a collection and delivery (logistic) restriction to the effect that after making a stop at the factory A first, stops are made at the factory B and the factory C, the logistic order for the factory B and the factory C not being questioned, next a stop is made at the factory D, and thereafter, a stop is made at the factory E is described as A; (B%C) ; D; E. Further, when collection or delivery is to be made at either one of the factory B and the factory C, it is described as A; (B#C); D; E.

And, with respect to collection and deliver routes and a required route both described with the proposed language, a method, which determines whether or not the logistic routes satisfy the require route, is proposed. However, determining whether or not logistic routes satisfy a required route becomes difficult as routes become complicated. Also, in actual collection of products, even if one piece of member is missing, it affects the operation of the whole factory. Also, in the case of a member demanding freshness, depending on collection order, the member may be spoiled. Therefore, it is necessary to select a truck which is operated via a route surely satisfying a required route. Accordingly, in the present invention, a method using algebra is proposed.

The method is to define a route of a truck and a required route as an algebraic order relation, and it is practical and at the same time mathematically ensures rigor. The method determines whether or not a truck route described with the proposed language can reach a destination indicated in a required route described with the same language, for which collection of products has been requested, in requested order, and determines that collection and delivery will not be made at destinations and in orders not described in the required route.

The order relation is applied to a logistic path (route) selecting system as described below. A receiver (or a truck operation entity) registers truck routes in the system. Each business entity as a shipper or a receiver presents a requiring logistic route (required route) to the system, and a truck following a route satisfying the required route is presented to the business entity.

Note that when one or more trucks satisfy the required route, a truck which runs via a route in which the number of times of movement from one logistic place to another logistic place is fewer is presented, and when distances between respective logistic places are known, a truck which runs via a route whose moving distance is shorter is presented.

<Detailed Description of Language>

Below, the language for describing movement routes (logistic routes) and order relation, which will be the basis of selecting a truck route, are defined.

Suppose that a movement route requested for a product (required route) is described by the following syntax $\varepsilon$, for example with a movement route S of each truck.

Definition 1: A set $\varepsilon$ of expressions having the following syntax rules is defined as follows, and elements thereof are described as E, $E_1$, $E_2$,..

[Mathematical Expression 1]

$$
\begin{array}{lll}
E & ::= & 0 \qquad\qquad \text{(movement termination)} \\
& | & \ell \qquad\qquad \text{(movement)} \\
& | & E_1;E_2 \qquad \text{(sequential composition)} \\
& | & E_1+E_2 \qquad \text{(selective composition)} \\
& | & E_1\#E_2 \qquad \text{(non-deterministic selective composition)} \\
& | & E_1\%E_2 \qquad \text{(non-deterministic commutative composition)} \\
& | & E_1\&E_2 \qquad \text{(asynchronous composition)} \\
& | & E^* \qquad\qquad \text{(closure)}
\end{array}
$$

Here, "1" is an element of a set L of shippers and/or receivers. Note that associative strength of each operator is in the order of ;, +, &, #, % in descending order.

A set of expressions excluding rules $E_1\#E_2$, $E_1\%E_2$, $E_1\&E_2$, and $E^*$ is defined as S (movement route), and elements thereof are described as S, S1, S2,.. Note that abbreviation may be appropriately made.

Meanings of each operator of the syntax $\varepsilon$ and the set S must await order relation of Definition 2 and Definition 3 described later, however, here, basic written informal meanings are described.

0 (movement termination) represents termination of collection and delivery.

1 (movement) represents that a truck goes to a shipper or receiver (logistic place) with a name 1.

$E_1;E_2$ (sequential composition) represents that after collection and delivery is carried out according to a route $E_1$, collection and delivery is carried out according to a route $E_2$.

$E_1+E_2$ (selective composition) represents that collection and delivery is carried out according to either the route $E_1$ or the route $E_2$. Selection thereof is explicitly determined based on whether or not it is possible to go to shippers and/or receivers in the route $E_1$ and the route $E_2$. This means that depending on a traffic jam, etc., the truck goes through either the route $E_1$ or the route $E_2$.

$E_1\#E_2$ (non-deterministic selective composition) represents non-deterministic selection of routes $E_1$ and $E_2$. It means that the truck can take either one of the route $E_1$ and the route $E_2$.

$E_1\%E_2$ (non-deterministic commutative composition) represents commutative confluent property of the routes $E_1$ and $E_2$. It represents that the truck may reverse the sequence of the route $E_1$ and the route $E_2$ on its route.

$E_1\&E_2$ (asynchronous composition) represents that collection and delivery through the route $E_2$ may be carried out while collection and delivery through the route $E_1$ is being carried out or that collection and delivery through the route $E_1$ may be carried out while collection and delivery through the route $E_2$ is being carried.

$E_1E_2^*$ (closure) represents that the truck may repeat movement through a route an arbitrary number of times. It represents that the truck may repeat movement through the route $E_2$ zero times or more while the truck is carrying out collection and delivery through the route $E_1$.

The language is a labeled transition system, and semantics of the language are defined as described below.

Definition 2: Transition relation of the set ε

[Mathematical Expression 2]

$$\langle \mathcal{E}, \mathcal{L} \cup \{\tau\} \{ \xrightarrow{\alpha} \subseteq \mathcal{E} \times \mathcal{E} \mid \alpha \in \mathcal{E} \cup \{\tau\} \} \rangle$$

Expression 2 is defined by inference rules based on the following structural operational semantics.

[Mathematical Expression 3]

$$\frac{-}{\ell \xrightarrow{\ell} 0} \quad \frac{E_1 \xrightarrow{\ell} E_1'}{E_1;E_2 \xrightarrow{\ell} E_1';E_2} \quad \frac{E_1 \xrightarrow{\ell} E_1'}{E_1 + E_2 \xrightarrow{\ell} E_1'} \quad \frac{E_2 \xrightarrow{\ell} E_2'}{E_1 + E_2 \xrightarrow{\ell} E_2'}$$

$$\frac{E_1 \xrightarrow{\ell} E_1'}{E_1 \& E_2 \xrightarrow{\ell} E_1' \& E_2} \quad \frac{E_2 \xrightarrow{\ell} E_2'}{E_1 \& E_2 \xrightarrow{\ell} E_1 \& E_2'}$$

$$\frac{E_1 \xrightarrow{T} E_1'}{E_1;E_2 \xrightarrow{T} E_1';E_2} \quad \frac{-}{E_1 \# E_2 \xrightarrow{T} E_1} \quad \frac{-}{E_1 \# E_2 \xrightarrow{T} E_2} \quad \frac{-}{E_1 \% E_2 \xrightarrow{T} E_1;E_2}$$

$$\frac{-}{E_1 \% E_2 \xrightarrow{T} E_2;E_1} \quad \frac{E_1 \xrightarrow{T} E_1'}{E_1 + E_2 \xrightarrow{T} E_1' + E_2} \quad \frac{E_2 \longrightarrow E_2'}{E_1 + E_2 \xrightarrow{T} E_1 + E_2'}$$

$$\frac{E_1 \xrightarrow{T} E_1'}{E_1 \& E_2 \xrightarrow{T} E_1' \& E_2} \quad \frac{E_2 \xrightarrow{T} E_2'}{E_1 \& E_2 \xrightarrow{T} E_1 \& E_2'}$$

Note that $E_0 \xrightarrow{T} E_1 \xrightarrow{T} \cdots \xrightarrow{T} E_{n-1} \xrightarrow{T} E_n$ is abbreviated to $E_0 (\xrightarrow{T})^n E_n$

Further, when "n" is an asterisk *), it means that τ-transition is repeated an indefinite number of times.
Each notation above represents that on the premise of the upper column, it can transit to the lower column.

In Definition 2, ℓ-transition corresponds to movement of a truck. For example, $E \xrightarrow{\ell} E'$ means that a truck moves to a logistic place ℓ following the route E, and the truck then takes the route E'. For example, $E_1 + E_2 \xrightarrow{\ell} E_1'$ represents that on the route $E_1$ and the route $E_2$, it is possible to move to the collection or delivery place ℓ by the route $E_1$, and the truck moves to the route $E_1$, and thereafter, the truck moves following the route $E_1$.

Also, τ- transition represents movement allowed in restrictions and requirements. For example, in $E_1 \# E_2 \xrightarrow{T} E_1$ and $E_1 \# E_2 \xrightarrow{T} E_2$ , the required route $E_1 \# E_2$ represents that the truck can take either the route $E_1$ or the route $E_2$ pursuant to τ- transition.

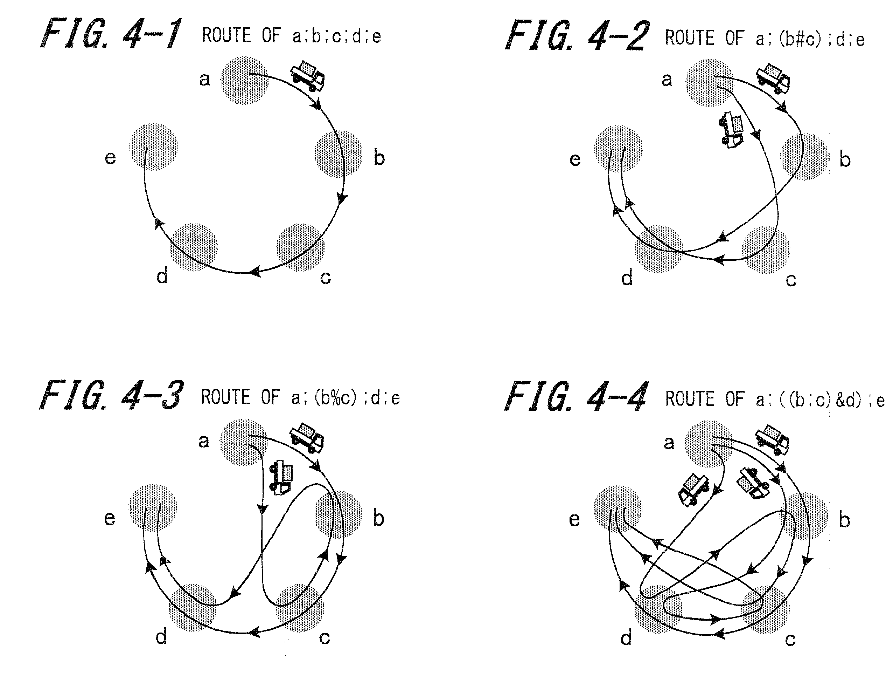

Note that the present language does not include recursive and loop notations, and this is because that each truck returns to a garage after completing collection and delivery and will never operate continuously. Representative examples of description are illustrated in Fig. 4-1 through Fig. 4-4, together with respective routes. Note that in Fig. 4-1 through Fig. 4-4, when multiple trucks are illustrated, it indicates that alternative routes are available.
For example, transition of a logistic route description a;b;c;d;e,in S is as follows:

[Mathematical Expression 4]

$$a;b;c;d;e \xrightarrow{a} b;c;d$$
$$\xrightarrow{b} c;d$$
$$\xrightarrow{c} d$$
$$\xrightarrow{d} e$$

This route is illustrated in Fig. 4-1.
An example of a required route (for example, a cargo delivery route) description ε (a;(b#c);d;e,in ε) is shown as follows:

[Mathematical Expression 5]

$$a;(b\#c);d;e \xrightarrow{a} (b\#c);d;e$$
$$\xrightarrow{\tau} b;d;e \ \text{ or } \ c;d;e$$

Here, # in the route description represents that the truck can take either of two routes. As illustrated in Fig. 4-2, after traveling to "a", the truck stops at either "b" or "c", and thereafter, goes to "d", and finally goes to "e".
Another example of a required route description (a; (b%c); d; e, in ε) is shown as follows:

[Mathematical Expression 6]

$$a;(b\%c);d;e \xrightarrow{a} (b\%c);d;e$$
$$\xrightarrow{\tau} b;c;d;e \ \text{ or } \ c;b;d;e$$

As illustrated in Fig. 4-3, % in the route description represents that the order of visiting collection and delivery (logistic) destinations is not questioned.
Another example of a required route description (a; ((b;c)&d); e) is shown as follows, which is an example for illustrating the meaning of &:

[Mathematical Expression 7]

$$a \; ; \; ((b \; ; \; c) \; \& \; d) \; ; \; e \quad \xrightarrow{a} \quad ((b \; ; \; c) \; \& \; d) \; ; \; e$$
$$\xrightarrow{b} \quad (c \; \& \; d) \; ; \; e$$
$$\xrightarrow{c} \quad d \; ; \; e$$
$$\xrightarrow{d} \quad e$$

Here, & indicates that two routes may be taken at one time. For example, it represents that after the truck visits "a", the truck may go to "d" on the way to "c" from "b", according to (b;c)&d (see Fig. 4-4).

As illustrated in Fig. 4-4, the following transitions are also possible.

[Mathematical Expression 8]

$$a \; ; \; ((b \; ; \; c) \; \& \; d) \; ; \; e \quad \xrightarrow{a} \quad ((b \; ; \; c) \; \& \; d) \; ; \; e$$
$$\xrightarrow{b} \quad (c \; \& \; d) \; ; \; e$$
$$\xrightarrow{d} \quad c \; ; \; e$$
$$\xrightarrow{c} \quad e$$

or

$$a \; ; \; ((b \; ; \; c) \; \& \; d) \; ; \; e \quad \xrightarrow{a} \quad ((b \; ; \; c) \; \& \; d) \; ; \; e$$
$$\xrightarrow{d} \quad (b \; ; \; c) \; ; \; e$$
$$\xrightarrow{b} \quad c \; ; \; e$$
$$\xrightarrow{c} \quad e$$

Further, transition of an example of a required route description (a; (b%c)) &d*&e* is shown as follows;

[Mathematical Expression 9]

$$(a \; ; \; (b \; \% \; c)) \; \& \; d^* \; \& \; e^* \quad \xrightarrow{a} \quad (b \; \% \; c)) \; \& \; d^* \; \& \; e^*$$
$$\xrightarrow{b} \quad c \; \& \; d^* \; \& \; e^*$$

The following transition is also possible for the above example.

[Mathematical Expression 10]

$$(a \,;\, (b \,\%\, c)) \,\&\, d^* \,\&\, e^* \;\xrightarrow{a}\; (b \,\%\, c)) \,\&\, d^* \,\&\, e^*$$
$$\xrightarrow{c}\; b \,\&\, d^* \,\&\, e^*$$

<Order Relation based on Movement Route>

Next, the method for judging if a movement route of a truck (mathematical expression of S) satisfies requirements and restrictions of shippers, receivers, and products as deliveries (mathematical expression of E) is formulated as order relation based on bisimulation. Note that in the order relation, the number of times of movement of each truck can be also examined.
Definition 3; Relation $R^n(R^n \subseteq E \times S)$ which satisfies the following three conditions for a natural number $(n(n \geqq 0)$ is considered.

[Mathematical Expression 11]

(1)  If $\forall \ell \,\forall\, E : \xrightarrow{\ell} E^{-}$

Then $\exists S^{-} : S \xrightarrow{\ell} S^{-}$ and $(E^{-}, S^{-}) \in R^{n-1}$

(2)  $\exists E^{-} : E \left(\xrightarrow{T}\right)^{*} E^{-}$ and $(E^{-}, S^{-}) \in R^{n}$

(3)  If $\forall \ell \,\forall\, S^{-} : S \xrightarrow{\ell} S^{-}$

Then $\exists E^{-} : E \left(\xrightarrow{T}\right)^{*} \xrightarrow{\ell} E^{-}$ and $(E^{-}, S^{-}) \in R^{n-1}$

Here, when n=0, n-1 is 0. And, a maximum set of $(E, S) \in R^n$ $(n \geqq 0)$ is called a satisfying order relation, and a satisfying order relation on E and S is described as $E \sqsubseteq_n S$.
Informal meaning of satisfying order relation is described.
First, a movement route S of a truck needs to satisfy a required route E.
The above-described Definition 1 indicates that the movement route S satisfies logistic order of the required route E, and further when the required route E can select logistic destinations, the movement route S also can select the same destinations, and the movement route S likewise satisfies the required route E with respect to each selected destination also.
Definition 2 indicates that the route S satisfies at least one among selection candidates based on nondeterministic operators (#, %, E*) in the required route E.
Definition 3 indicates that the route S matches the required route E, that is, the truck following the route S will not travel outside the required route E.
Note that "n" of satisfying order relation represents the number of times of movement of the truck necessary for satisfying the required route E.
The logistic route satisfying a required route based on the above-described features is ensured to satisfy the required route even if the logistic route is combined with another logistic route satisfying the required route. Several comparative examples are shown next.
When arbitrary selection of one or more routes is allowed:

[Mathematical Expression 12]

$$(a \% b) ; (c+d) \quad \sqsupseteq_3 \quad a ; b ; (c+d)$$

When arrival order is arbitrary:

[Mathematical Expression 13]

$$(a \% b \% c) ; h \quad \sqsupseteq_4 \quad c ; a ; b ; h$$

Here, the required route on the left-hand side requires that the truck travels round logistic places a, b, and c in an arbitrary order and returns to a logistic destination h. When the logistic route on the right-hand side is changed to a;b;c;h, it is still in a satisfying order relation, however, when the logistic route is a;b; or a;h;b;h;c;h, the satisfying order relation is not maintained.

Best mode for Carrying out the Invention

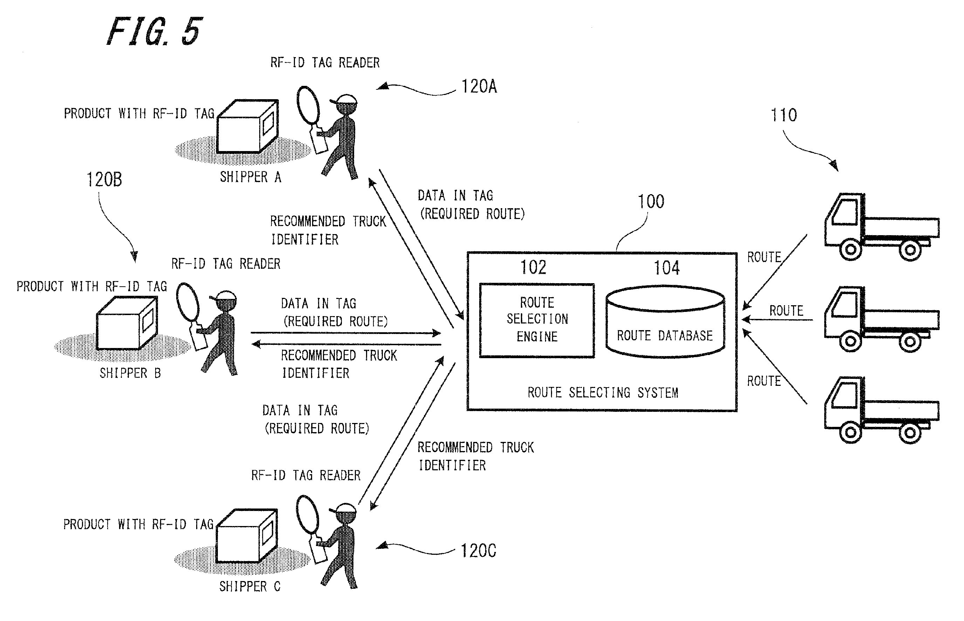

A proposed system includes, as illustrated in Fig. 5, three parts, a truck operation entity 110, shippers or receivers 120A, 120B, 120C, and a logistic path (route) selecting system 100 which performs selecting a truck.

<Truck Operation Entity 110>

Each time a truck driver or a truck operation manager of the truck operation entity 110 changes a logistic route of a truck, the truck driver or the truck operation manager registers the route to a route database 104 of the logistic route selecting system 100, together with a truck identifier, using a terminal connected to an electrical network.
The operation instruction or operation table imposed by relevant laws includes information corresponding to logistic order. Therefore, the data of logistic order can be obtained from the description of the operation instruction or operation table. Such data can be inputted with an input device, such as a keyboard, a mouse, etc., of the terminal, through a user interface.
The data of logistic order thus inputted is automatically converted to an S description, and registered to the route database 104 of the logistic route selecting system 100.
In order to reduce judgment cost, it is preferable that the logistic route selecting system 100 generates, upon receiving a logistic route of a truck from a terminal, a tree structure (described later) corresponding to the described one, which will be used in judgment, and registers the generated tree structure to the route database 104. Note that the tree structure of a truck route is a deterministic and finite tree structure because it does not include nondeterministic selection and it completes.

<Shippers or Receivers 120A, 120B, 120C>

Shipping entities (product shipping side) or receiving entities (product receiving side) 120A, 120B, 120C input respective collection and delivery (logistic) requirements and restrictions to the logistic route selecting system 100 from each terminal, in the format of E, through the user interface. When a truck satisfying the logistic requirements and restrictions is available, the identifier of the truck is received from the logistic route selecting system 100.
Logistic requirements and restrictions, for example, logistic places and constraint conditions such as logistic order, etc. are inputted by carrying out display selection, etc. on a screen of a terminal, and converted to E description. The E description is written on a RFID tag or printed on a label in the form of two-dimensional bar-code, and such RFID tag or label is attached to cargo in advance.
The E description on the RFID tag or bar-code label is read with a reader connected with the terminal, and transmitted to the logistic route selecting system 100 from the terminal, thus enabling selecting an appropriate truck for each cargo.

<Logistic Route Selecting System 100>

The logistic route selecting system 100 includes the route database 104 for registering a logistic route of each truck from a terminal on the truck operation entity's side, and stores and manages routes of trucks.
Upon receiving logistic requirements and restrictions from a terminal on the shipper's or receiver's side, a route selection engine 102 of the system 100 returns an identifier of a truck having a route which satisfies the received requirements and restrictions and whose number of times of movement is the smallest.

<Process in Logistic Route Selecting System 100>

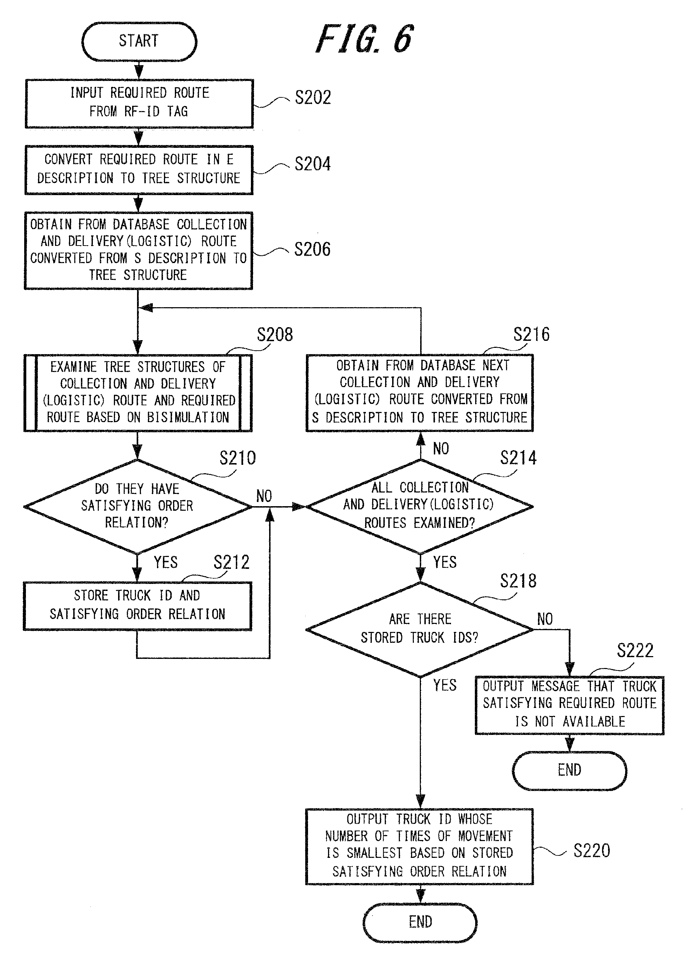

A process in the route selection engine 102 of the logistic route selecting system 100 is described using a flowchart of Fig. 6.
The logistic route selecting system 100 receives data (in E description) of logistic requirements and restrictions regarding a logistic route (required route), which has been read with an RFID reader for example, from a terminal (S202).
Here, the logistic route selecting system 100 is configured to search a route satisfying the received requirements and restrictions and having the smallest number of times of movement, from the routes of trucks (in S description) registered in the route database 104, using satisfying order relation of Definition 3 described above. A tree structure, in which state transition destinations of Definition 2 are node points and labeled transitions are named branches, is generated for each of two descriptions (E, S) as comparison targets, and these two tree structures are compared.
Therefore, the E description describing a required route is converted to a tree structure (S204).
Then, because S description describing a logistic route of each truck has been converted to a tree structure when registering data of the truck in the route database 104, a tree structure of the route of a truck in S description is obtained from the database 104 (S206).
Then, according to Definition 3, in two tree structures, whether or not corresponding node points have branches of the same name is examined for all node points, and based on bisimulation, satisfying order relation is judged (S208, S210). This method of judging will be described later in detail. If a logistic route of a truck and a required route have satisfying order relation (YES in step S210), an identifier number (ID) of the truck and satisfying order relation are stored (S212).
The above-described satisfying order relation is examined with respect to all logistic routes of trucks (S214, S216).
If checking of satisfying order relation has been completed for all routes of trucks (YES in step S214), when a route having satisfying order relation with the required route is available (YES in step S218), and if one or more routes having satisfying order relation are available, a route, in which "n" of satisfying order relation of Definition 3 is the smallest, that is, the number of times of movement is the smallest, is selected (S220).
At this time, when all movement distances of the logistic routes are previously known, the total of movement distances is calculated for each logistic route, and a route with the smallest sum of movement distances may be selected.

<Judgment of Satisfying Order Relation>

Judgment of satisfying order relation (S208, S210) is carried out by performing the following operations based on bisimulation, from respective roots as source points up to node points having no partial trees. As for bisimulation, refer to Non-patent Document 1.

(1) First, examine if node points as comparison targets have branches of the same name
(2) If the node points as comparison targets have equivalent branches, the operation (1) is repeated for node points at tips of the branches.
(3) If the node points as comparison targets do not have equivalent branches, the operation (1) is repeated, after returning to a previous node point, for the remaining node point

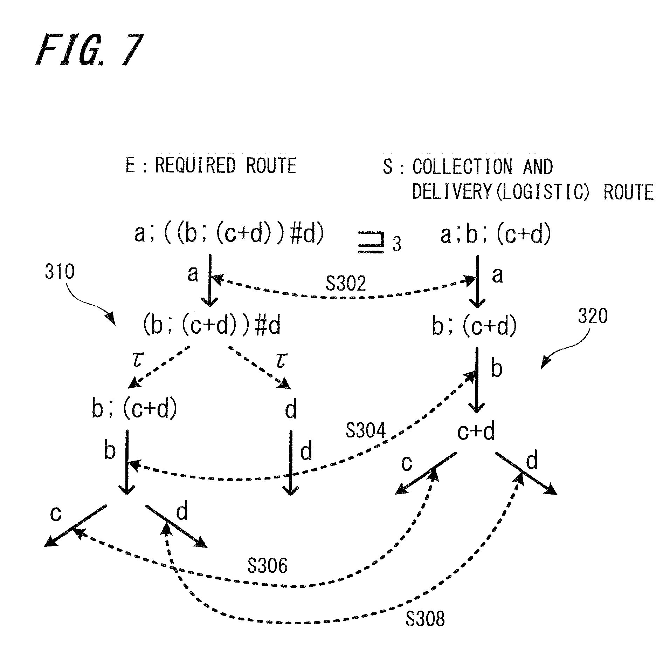

The above-described operations for judgment of satisfying order relation are described referring to Fig. 7. In Fig. 7, the left side illustrates a tree structure 310 of E description (a; ((b; (c+d))#d) of a required route, and the right side illustrates a tree structure of S description (a;b;(c+d)) of a logistic route.
Examining according to (1) above whether routes as source points have branches of the same name (S302), both routes have the same name "a". Therefore, it is examined next according to (2) above whether branches at the next node points have the same name (S304). In this case, because the branches have the same name "b", according to (2) above, the following branches are examined (S306, S308). Then, it is understood that the branches have the same names "c" and "d". Note that each time the node point moves (hierarchy level advances), the number of times of movement increases by one.
Then, because it has reached to a node point having no source point, the process ends, and it is judged as that there is satisfying order relation, and an identification number of a truck having this logistic route and the number of times n (in this case, 3) the node point has moved (i.e., the number of times of movement of the truck) can be obtained.

**Claims**

1. A logistic route selecting system, comprising:

   a storage device storing one or more logistic routes in advance;
   a required route inputting device inputting a required route for an object to be put on a logistic route;
   a comparison device comparing the inputted required route and the one or more logistic routes stored in the storage device and obtaining logistic routes satisfying the inputted required route; and
   an output device outputting a logistic route satisfying the required route whose number of times of movement from one logistic place to another logistic place is the smallest among the logistic routes satisfying the required route,
   wherein the required route describes restrictions and requirements about order of visiting logistic places,
   wherein each logistic route describes order of visiting logistic places with a sub-set of the required route, and
   wherein the comparison device compares the required route and the logistic routes, each having been converted to a form of a tree structure, and obtains respective numbers of times of movement of the logistic routes satisfying the required route.

2. The logistic route selecting system according to claim 1, further comprising:

   a device for storing one or more logistic routes in the storage device, the device converting descriptions of one or more logistic routes to tree structures when storing the one or more logistic routes in the storage device, and
   wherein the comparison device converts description of the inputted required route to a tree structure, and reads out from the storage device the logistic routes whose descriptions have been converted to tree structures to compare with the required route whose description has been converted to a tree structure.

3. The logistic route selecting system according to claim 1 or 2,
   wherein the comparison device obtains respective sums of movement distances of the logistic routes satisfying the required route, instead of the numbers of times of movement, and the output device outputs a logistic route satisfying the required route whose sum of movement distances is the smallest among the logistic routes satisfying the required route.

# FIG. 1A SHIPPERS INDIVIDUALLY PROVIDE TRUCKS

# FIG. 1B MILK-RUN SYSTEM

FIG. 2

**FIG. 3-1** ROUTE OF TRUCK 1

TRUCK 1

**FIG. 3-2** ROUTE OF TRUCK 2

TRUCK 2

**FIG. 3-3** ROUTE OF TRUCK 3

TRUCK 3

**FIG. 3-4** ROUTE OF TRUCK 4

TRUCK 4

# FIG. 4-1 ROUTE OF a;b;c;d;e

a

e

b

d

c

# FIG. 4-2 ROUTE OF a;(b#c);d;e

a

e

b

d

c

# FIG. 4-3 ROUTE OF a;(b%c);d;e

a

e

b

d

c

# FIG. 4-4 ROUTE OF a;((b;c)&d);e

a

e

b

d

c

EP 2 299 417 A1

# FIG. 5

RF-ID TAG READER
120A

PRODUCT WITH RF-ID TAG
SHIPPER A

120B

RF-ID TAG READER

PRODUCT WITH RF-ID TAG
SHIPPER B

DATA IN TAG
(REQUIRED ROUTE)

RECOMMENDED TRUCK
IDENTIFIER

DATA IN TAG
(REQUIRED ROUTE)

RECOMMENDED TRUCK
IDENTIFIER

DATA IN TAG
(REQUIRED ROUTE)

RECOMMENDED TRUCK
IDENTIFIER

RF-ID TAG READER

PRODUCT WITH RF-ID TAG
SHIPPER C

120C

110

100

102    104

ROUTE
SELECTION
ENGINE

ROUTE DATABASE

ROUTE SELECTING SYSTEM

ROUTE

ROUTE

ROUTE

EP 2 299 417 A1

17

## FIG. 6

```
        ( START )

┌─────────────────────────┐
│  INPUT REQUIRED ROUTE   │  S202
│      FROM RF-ID TAG     │
└─────────────────────────┘

┌─────────────────────────┐
│ CONVERT REQUIRED ROUTE IN E │  S204
│ DESCRIPTION TO TREE STRUCTURE │
└─────────────────────────┘

┌─────────────────────────┐
│ OBTAIN FROM DATABASE COLLECTION │
│ AND DELIVERY (LOGISTIC) ROUTE   │  S206
│ CONVERTED FROM S DESCRIPTION TO │
│        TREE STRUCTURE           │
└─────────────────────────┘
```

S208 — EXAMINE TREE STRUCTURES OF COLLECTION AND DELIVERY (LOGISTIC) ROUTE AND REQUIRED ROUTE BASED ON BISIMULATION

S216 — OBTAIN FROM DATABASE NEXT COLLECTION AND DELIVERY (LOGISTIC) ROUTE CONVERTED FROM S DESCRIPTION TO TREE STRUCTURE

S210 — DO THEY HAVE SATISFYING ORDER RELATION?

NO

S214 — ALL COLLECTION AND DELIVERY (LOGISTIC) ROUTES EXAMINED?

NO

YES — S212 — STORE TRUCK ID AND SATISFYING ORDER RELATION

YES

S218 — ARE THERE STORED TRUCK IDS?

NO

S222 — OUTPUT MESSAGE THAT TRUCK SATISFYING REQUIRED ROUTE IS NOT AVAILABLE

( END )

YES

S220 — OUTPUT TRUCK ID WHOSE NUMBER OF TIMES OF MOVEMENT IS SMALLEST BASED ON STORED SATISFYING ORDER RELATION

( END )

# FIG. 7

E : REQUIRED ROUTE  S : COLLECTION AND DELIVERY(LOGISTIC) ROUTE

<table>
<tr><td colspan="2" align="center"><strong>INTERNATIONAL SEARCH REPORT</strong></td><td colspan="2">International application No.<br>PCT/JP2009/059136</td></tr>
</table>

A.  CLASSIFICATION OF SUBJECT MATTER
*G08G1/00*(2006.01)i, *B65G61/00*(2006.01)i, *G01C21/00*(2006.01)i, *G06Q50/00*
(2006.01)i, *G08G1/0969*(2006.01)i

According to International Patent Classification (IPC) or to both national classification and IPC

B.  FIELDS SEARCHED

Minimum documentation searched (classification system followed by classification symbols)
G08G1/00, B65G61/00, G01C21/00, G06Q50/00, G08G1/0969

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2006-79478 A (Yoshiaki MIZUTANI),<br>23 March, 2006 (23.03.06),<br>Full text<br>(Family: none) | 1-3 |
| A | JP 6-273181 A (Hitachi, Ltd.),<br>30 September, 1994 (30.09.94),<br>Full text<br>(Family: none) | 1-3 |
| A | JP 2000-231506 A (NEC Corp.),<br>22 August, 2000 (22.08.00),<br>Full text<br>& GB 2351167 A      & CN 1263313 A | 1-3 |

☒   Further documents are listed in the continuation of Box C.    ☐   See patent family annex.

\*    Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

Date of the actual completion of the international search
01 June, 2009 (01.06.09)

Date of mailing of the international search report
16 June, 2009 (16.06.09)

Name and mailing address of the ISA/
Japanese Patent Office

Authorized officer

Facsimile No.

Telephone No.

Form PCT/ISA/210 (second sheet) (April 2007)

**INTERNATIONAL SEARCH REPORT**

International application No.

PCT/JP2009/059136

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-299858 A  (Pioneer Corp.),<br>28 October, 2004 (28.10.04),<br>Par. Nos. [0110], [0168], [0177]<br>(Family: none) | 1-3 |
| A | JP 2-56100 A  (Fujitsu Ltd.),<br>26 February, 1990 (26.02.90),<br>Full text<br>(Family: none) | 1-3 |
| A | JP 2002-140788 A  (Toshiba Corp.),<br>17 May, 2002 (17.05.02),<br>Par. Nos. [0019], [0023], [0030], [0047]<br>(Family: none) | 1-3 |
| A | JP 10-232991 A  (Sumitomo Electric Industries,<br>Ltd.),<br>02 September, 1998 (02.09.98),<br>Par. Nos. [0051] to [0054]<br>(Family: none) | 1-3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004363907 A

**Non-patent literature cited in the description**

- **R. Milner.** Communication and Concurrency. Prentice Hall, 1989